# EUROPÄISCHE PATENTSCHRIFT

(11) **EP 0 592 418 B1**
(45) Veröffentlichungstag und Bekanntmachung des Hinweises auf die Patenterteilung: **10.05.1995**
(21) Anmeldenummer: 91912413.1
(22) Anmeldetag: 12.07.1991
(51) Int. Cl.: B01D 53/34, A62D 3/00

(54) **VERFAHREN UND EINRICHTUNG ZUM ENTGIFTEN DER ABGASE AUS MÜLLVERBRENNUNGSANLAGEN**
PROCESS AND DEVICE FOR DETOXIFYING THE EXHAUST GAS FROM RUBBISH INCINERATION PLANTS
PROCEDE ET DISPOSITIF DE DECONTAMINATION DES GAZ D'ECHAPPEMENT D'USINES D'INCINERATION DE DECHETS

(43) Veröffentlichungstag der Anmeldung: 20.04.1994
(73) Patentinhaber: MASCHINEN- UND ANLAGENBAU GRIMMA GmbH, D-04662 Grimma (DE)
(72) Erfinder: DUMMERSDORF, Hans-Ulrich, D-5090 Leverkusen (DE); DUMMERSDORF, Heinz, D-7240 Grimma (DE)
(74) Vertreter: Grünecker, Kinkeldey, Stockmair & Schwanhäusser Anwaltssozietät
(86) Internationale Anmeldenummer: EP9101312
(87) Internationale Veröffentlichungsnummer: WO9300982

(56) Entgegenhaltungen:
- EP-A- 0 295 083
- DE-A- 3 206 785
- GB-A- 2 165 827
- GB-A- 2 174 691

## Beschreibung

Die Erfindung betrifft ein Verfahren und eine Einrichtung zum Entgiften der Abgase aus Müllverbrennungsanlagen, insbesondere Sondermüllverbrennungsanlagen, zur Beseitigung toxischer Verbindungen wie Halogenorganika und Kohlenwasserstoffen, wobei in die als heißer Frischrauchgasstrom die Müllverbrennungsanlage verlassenden Abgase zur thermischen Spaltung ihrer toxischen Verbindungen zumindest ein Plasmagasstrom eingemischt wird.

Die Erfindung ist insbesondere zur völligen Beseitigung von Dioxinen, FCKW und anderen Giftstoffen aus den Abgasen von Müllverbrennungsanlagen, insbesondere Sondermüllverbrennungsanlagen, vorgesehen.

Für die Entsorgung industrieller und kommunaler Abprodukte stellen neben der aus Raum- und Akzeptanzgründen nur beschränkt erweiterungsfähigen Deponie Müllverbrennungsanlagen, die praktisch einzige Problemlösung für die Beseitigung vorhandener Abprodukte dar, wobei der Betrieb von Müll- und Sondermüllverbrennungsanlagen bzw. der Bau von Neuanlagen ebenfalls auf zunehmenden Widerstand und abnehmende Akzeptanz stößt. Dies liegt insbesondere darin begründet, daß, wie neuere Untersuchungen ergeben haben, die Abgasreinigung der Müllverbrennungsanlagen insbesondere im Hinblick auf Dioxine und andere als giftig chemische Verbindungen unzureichend ist.

Das Problem besteht vor allem darin, daß in allen industriellen und kommunalen Abprodukten in gewissem Umfang gebundenes Chlor vorhanden ist, welches die Bildung der hochtoxischen und besonders gefürchteten, höher chlorierten Kohlenwasserstoffe, insbesondere Dibenzodioxine und Dibenzofurane, eine Verbrennung hervorruft.

Mit Rücksicht auf dieses bereits seit längerem bekannte Problem ist zur möglichsten Vermeidung oder Reduzierung des Entstehens solcher Verbindungen im Rauchgas der Müllverbrennungsanlage die Verbrennungstemperatur verbindlich auf Werte oberhalb von 1200°C festgelegt, wobei diese Temperatur in den Müllverbrennungsanlagen üblicherweise zumeist durch eine, dem herkömmlich zum Einsatz gelangenden Drehrohrofen nachgeschaltete Hochtemperaturverbrennungsstufe erreicht wird.

Dennoch hat sich herausgestellt, daß in fast allen Müllverbrennungsanlagen trotzdem Emissionen gefährlicher Stoffe auftreten, die eine Reihe von Ursachen haben. Diese bestehen z.B. darin, daß die Verbrennungsräume in den Drehrohröfen bzw. in der Hochtemperaturnachverbrennung infolge punktueller Wärmewellen in ihrem Inneren das Auftreten räumlich und zeitlich inhomogener Temperaturfelder zulassen. Zudem bedingt die Hetoregenität der zugeführten Abprodukte, z.B. in bezug auf Heizwerte, Zusammensetzung etc. eine komplizierte Regelung der Unterfeuerungsleistung oder der Chargenkombination, um die geforderten Mindesttemperaturen einzuhalten.

Überdies wurde in jüngerer Zeit festgestellt, daß sich Dioxine auch bei niedrigeren Temperaturen, z.B. im Bereich von 300 bis 400°C, wie sie in und nach dem Abhitzekessel der Verbrennungsanlage herrschen, nachträglich und unabhängig von der Hochtemperaturverbrennungsstufe bei Anwesenheit von Kohlenwasserstoffresten aus der Verbrennung, chlorhaltigen Verbindungen und Sauerstoff in Anwesenheit katalytisch wirkender Stäube bilden können.

Als Emissionsquellen für gefährliche Produkte ergeben sich somit in einer Müllverbrennungsanlage vor allem nicht zerlegte Chlororganika aus der Verbrennung und der Hochtemperaturverbrennungsstufe sowie neugebildete Chlororganika aus durch die Hochtemperaturverbrennung durchgebrochenen Restkohlenwasserstoffen im Bereich des Abhitzkessels bei Temperaturen zwischen 300 und 400°C.

Da diese Nachteile den Sondermüllverbrennungsanlagen generell anhaften (Zerstörungseffizienz für CKW maximal 99,998%), wird ihre umweltpolitische Akzeptanz bereits grundsätzlich in Frage gestellt, ohne daß bisher tatsächlich Alternativkonzepte für eine Abproduktbeseitigung ohne den Einsatz von Verbrennungsanlagen vorliegen.

Aufgrund der andererseits hohen Müllbeseitigungskapazität derartiger Anlagen müssen sich die Anstrengungen vor allem auch auf eine tatsächlich von Resten hochtoxischer Verbindungen völlig freie Abgasatmosphäre aus Müllverbrennungsanlagen richten.

Es wurde bereits versucht, die Neubildung von polychlorierten Kohlenwasserstoffen dadurch zu umgehen, daß der Temperaturbereich zwischen 400 und 300°C durch Einspritzen von Wasser rasch durchquert wird. Diese Lösung hat dennoch den Nachteil, daß die Bildung von Dioxinen und Furanen nicht sicher und zuverlässig verhindert werden kann. Darüber hinaus sind auf diese Weise auch die aus der Hochtemperaturverbrennungsstufe austretenden, vorgebildeten Dioxine und Furane sowie andere CKW bzw. FCKW nicht zu beseitigen.

Nach neueren Erkenntnissen (Abfallwirtschaftsjournal 2/1990 Nr. 4) tritt neben der primären Dioxinbildung in der Hochtemperaturstufe einer Müllverbrennungsanlage insbesondere eine sekundäre, katalytisch initiierte Dioxinbildung in der Abhitzeanlage beim Durchqueren des Bereiches von 350 bis 300°C auf. Es wurde vorgeschlagen, durch Einspritzen bestimmter Chemikalien hier die Dioxinbildung zu behindern. Neben der schwierigen Prozeßführung, insbesondere im Hinblick auf das Temperaturregime, wird die primäre Dioxinbildung aber dadurch nicht verhindert, da dieser Anteil im Rauchabgas bereits vorliegt.

Ein entscheidender Nachteil der meisten bekannten Müllverbrennungsanlagen sowie Verbrennungsverfahren, der bisher nicht beseitigt werden konnte, besteht also darin, daß im Hinblick auf das Temperaturniveau und die Homogenität des Temperaturfeldes in die Müllverbrennungsanlage in den Verbrennungszonen nicht die Voraussetzungen zur vollkommenen thermischen Zerstörung der polychlorierten Kohlenwasserstoffe besitzen.

Es wurde auch bereits vorgeschlagen, Abprodukte mittels eines chemisch-reaktiven Wasserdampfplasmas schadlos zu entsorgen. Dieses Verfahren ist allerdings für die Entgiftung großer Gasströme wie Frischrauchgasströme aus Müllverbrennungsanlagen, die kleine Schadstoffkonzentrationen aufweisen, nicht geeignet, da sich seine Anwendung sowohl aus energetischen Gründen (Aufheizung sehr großer Gasströme) verbietet, als auch verfahrenstechnisch unwirksam ist, weil in einem fast vollständig aus Rauchgas bestehenden Gasstrom die chemisch-reaktive Einwirkung des Wasserdampfplasmas auf die Schadstoffe nicht erreichbar wäre. Auch aus weiteren Gründen, z.B. dergestalt, daß eine Plasmatron/Plasmareaktor-Kombination mit derart großen Rauchgasströmen nicht betreibbar wäre, steht der Anwendung dieses Verfahrens auf den vorliegenden Einsatzfall entgegen.

Es ist überdies auch bereits bekannt, hinter der Sonderabfallverbrennung eine Rauchgasendreinigung durch Adsorption von Dioxinen, Furanen und polycyclischen Kohlenwasserstoffen an Aktivkoks vorzunehmen (Abfallwirtschaftsjournal 2/1990, Nr. 4, S. 173). Dieses Verfahren erfordert allerdings zusätzlich aufwendige Verfahrensstufen und teuere Materialien und führt zur Erzeugung eines hochkonzentrierten Aktivkokses, dessen Entsorgung wiederum schwierig ist und der selbst eine neue, schwere Umweltbelastung bilden kann.

Zur Abgasbehandlung ist es aus der GB-A-21 65 827 bekannt, den Gasstrom einer kombinierten UV- und Wärmebehandlung zur chemischen und thermischen Auftrennung höherwertiger Kohlenwasserstoffe zu unterziehen. Der apparative Aufwand hierfür ist allerdings nicht unbeträchtlich und eine Nachrüstung bestehender Müllverbrennungsanlagen nicht in gewünscht unkomplizierter und kostengünstiger Weise möglich.

Der Erfindung liegt daher die Aufgabe zugrunde, ein Verfahren und eine Einrichtung zum Behandeln und Entgiften der Abgase aus Müllverbrennungsanlagen der eingangs genannten Art anzugeben, derart, daß von diesen Anlagen keine für die Umwelt schädlichen Verbindungen mehr emittiert werden. Dabei soll es insbesondere möglich sein, auch bereits vorhandene Müllverbrennungsanlagen auf einfache Weise mit der erfindungsgemäßen Einrichtung nachzurüsten bzw. mit dem erfindungsgemäßen Verfahren zu betreiben, ohne daß dies zu beträchtlichen Kostensteigerungen führt. Überdies sollen die Aufwendungen für Investitions- und Betreibungskosten der Müllverbrennungsanlage nicht wesentlich über das bisherige Maß hinaus erhöht werden und Änderungen in der Verfahrensführung beim Betrieb der Müllverbrennungsanlage vermieden sein.

Insbesondere liegt der Erfindung die Aufgabe zugrunde, ein Verfahren und eine Einrichtung der eingangs genannten Art anzugeben, durch die es möglich ist, die im Rauchgas von Müllverbrennungsanlagen in sehr geringer Konzentration vorliegenden Kohlenwasserstoffe und Halogenorganika zu zerstören und ihre Neubildung unter allen Betriebsbedingungen zu unterbinden, ohne daß hierdurch die verfahrenstechnische Prozeßführung der Müllverbrennungsanlage verändert werden muß. Außerdem soll die Lösung in vorteilhafter Weise die Berücksichtigung energiewirtschaftlicher Aspekte ermöglichen und die Voraussetzungen dafür schaffen, daß eine Abhitzeverwertung mit hohem Wirkungsgrad erfolgen kann.

Die vorgenannte Aufgabe wird hinsichtlich des Verfahrens erfindungsgemäß gelöst durch ein Verfahren zum Entgiften der Abgase aus Müllverbrennungsanlagen der eingangs genannten Art, bei dem der heiße Frischrauchgasstrom in einer Rekuperationsstufe mit einem Hochtemperatur-Wärmeübertrager zunächst weiter aufgeheizt und anschließend der Frischrauchgasstrom durch Injektion des Plasmagasstromes weiter erhitzt wird.

Auf diese Weise kann eine Vernichtung toxischer Stoffe im Rauchgas nicht nur zuverlässig, sondern auch mit verhältnismäßig geringem Energieaufwand erreicht werden. Der heiße Frischrauchgasstrom wird dabei in einer Rekuperationsstufe mit einem Hochtemperatur-Wärmeübertrager zunächst weiter aufgeheizt und anschließend der so erhitzte Frischrauchgasstrom durch Injektion zumindest eines Plasmagasstromes weiter erhitzt. Dabei wird eine energetisch vorteilhafte Lösung nach einem weiteren, bevorzugten Ausführungsbeispiel des erfindungsgemäßen Verfahrens dadurch erreicht, daß die Abwärme der Abgase aus der Plasmastufe, d.h. das Gasgemisch, bestehend aus Frischrauchgas und Plasmagas, im Anschluß an die Plasmastrahlbehandlung im Gegenstromprinzip als Heizmedium verwendet wird, um den aus der Müllverbrennungsanlage kommenden Frischrauchgasstrom zur Vorbereitung für die Plasmastrahlgasbehandlung weiter aufzuheizen.

Eine besonders bevorzugte Ausführungsform des erfindungsgemäßen Verfahrens besteht daher darin, den heißen Frischrauchgasstrom aus der Müllverbrennungsanlage in einem Hochtemperatur-Wärmeübertrager weiter aufzuheizen, anschließend durch Vermischen mit zumindest einem Plasmastrahl aus einem oder mehreren Plasmatrons weiter zu erhitzen und anschließend das den höchsten Temperaturwert aufweisende Gasgemisch (Frischrauchgas/Plasmastrahlgas) im Anschluß an das Plasmatron unmittelbar zur Aufheizung des Frischrauchgases, vorzugsweise im Gegenstromprinzip, das der Plasmastrahlbehandlung zugeführt wird, zu verwenden.

Der Frischrauchgasstrom wird vorzugsweise unmittelbar der Hochtemperaturverbrennungsstufe bzw. Nachverbrennungsstufe der Müllverbrennungsanlage entnommen.

Nach einer weiteren Ausführungsform des erfindungsgemäßen Verfahrens ist es aber auch möglich, das Frischrauchgas direkt aus einer primären Verbrennungsstufe (Drehrohrofen) der Müllverbrennungsanlage zu entnehmen und auf eine Hochtemperaturverbrennungsstufe zu verzichten.

Für das Hauptziel der vorliegenden Erfindung, die völlige Beseitigung von Dioxinen und Furanen aus dem Abgas der Abgasmüllverbrennungsanlagen, ist die Verwendung des mit dem Plasmastrahl behandelten Frischrauchgases als Heizmedium für das aus der Müllverbrennungsanlage kommende Frischrauchgas nicht unerläßlich, d.h. die Aufheizung des Frischrauchgasstromes stromab des oder der Plasmatrons kann auch auf andere Weise erfolgen. Allerdings ist es aus energetischen Gründen besonders vorteilhaft, den Hochtemperatur-Wärmeübertrager mit dem stromab des bzw. der Plasmatrons vorliegenden Gasgemisch aus Frischrauchgas und Plasmastrahlgas als Wärmeträger und im Gegenstromverfahren zu betreiben.

Als Plasmaträgergas kann Luft verwendet werden, gegebenenfalls kann auch Wasserdampf zweckmäßig sein.

Eine aus energetischen Gründen besonders zu bevorzugende Lösung ist die Verwendung eines Teilstromes des heißen Abgases bzw. Frischrauchgases als Plasmaträgergas, das dem Frischrauchgasstrom vor Einspeisung in den Hochtemperatur-Wärmeübertrager entnommen wird.

Zur Lösung der obigen Aufgabe hinsichtlich der Einrichtung ist erfindungsgemäß im Anschluß an die Müllverbrennungsanlage ein Rekuperator mit einem Hochtemperatur-Wärmeübertrager sowie einem Plasmatron zur Einmischung zumindest eines Plasmagasstromes in den Frischrauchgasstrom vorgesehen.

Vorzugsweise ist die Müllverbrennungsanlage mit einem Rekuperator verbunden, der integral einstückig einen Hochtemperatur-Wärmeübertrager sowie in baulicher Einheit mit diesem zumindest ein Plasmatron aufweist, wobei der Hochtemperatur-Wärmeübertrager mit dem Gasgemisch stromab des Plasmatrons, bestehend aus dem aufgeheizten Frischrauchgasstrom und dem in diesen injizierten Plasmastrahlgasstrom als Heizmedium im Gegenstromverfahren betreibbar ist.

Nach einer weiteren, bevorzugten Ausführungsform der Erfindung weist die Einrichtung stromab des Rekuperators eine Abhitzeverwertungsstufe sowie eine Rauchgasreinigungsstufe auf.

Weitere, bevorzugte Ausgestaltungen des Erfindungsgegenstandes sind in den übrigen Unteransprüchen dargelegt.

Ein auch unter energiewirtschaftlichen Gesichtspunkten besonders bevorzugtes Ausführungsbeispiel des erfindungsgemäßen Verfahrens zur Beseitigung von z.B. Dioxinen aus den Abgasen der Hochtemperaturmüllverbrennung in Verbindung mit einem Hochtemperatur-Wärmetauscher, an den sich eine Plasmastufe zur Plasmastrahlbehandlung des Abgases mit niedrigem energetischen Aufwand anschließen läßt, arbeitet wie folgt:
Zunächst wird, insbesondere im Anschluß an eine vorgeschaltete Hochtemperaturverbrennungsstufe der Müllverbrennungsanlage das aus dieser abgenommene Abgas (Frischrauchgasstrom), das mit hochgiftigen Schadstoffen in sehr geringer Konzentration beladen ist, in einen Hochtemperatur-Wärmeübertrager auf eine höhere Temperatur, z.B. von 1200°C auf 1380°C aufgeheizt. Hierdurch kommt es bereits zu einem thermischen Zerfall von Schadstoffen in der Gasphase, insbesondere an den heißen Wänden des Hochtemperatur-Wärmeübertragers, die eine höhere Temperatur als die Gasphase selbst aufweisen. Mithin wird bereits in dieser ersten Stufe der thermischen Behandlung des aus der Müllverbrennungsanlage abgenommenen Abgases ein großer Teil der aus der Hochtemperaturverbrennungsstufe der Müllverbrennungsanlage stammenden, nicht umgesetzten organischen Komponenten in der Gasphase zerstört. Die zweite Prozeßstufe der thermischen Einwirkung auf den Rauchgasstrom bildet das Zumischen eines chemisch nicht wirksamen Plasmastrahles kleiner Leistung in den vergleichsweise voluminösen Rauchgasstrom, der in diesem eine geringfügige Temperaturerhöhung in Form einer Spitzenaufheizung bewirkt, z.B. auf ca. 1400°C oder mehr. Durch die eintretende Temperaturerhöhung wird ein weiterer Teil der organischen Schadstoffkomponenten gespalten und teilweise ebenfalls kontaminierte Flugasche somit bis in den Kern der Aschepartikel durchgeheizt, so daß organische Produkte bis in den Kern zerstört werden.

Des weiteren bildet sich infolge der hohen Temperatur an der Oberfläche der Aschepartikel eine dünne Schmelzeschicht, die nach Abkühlung glasartig erstarrt und zu einer Inertisierung des Flugstaubes bezüglich Eluation führt. Zugleich wird mit der Aufheizung die für die praktische Ausführung der Erfindung besonders bevorzugte Voraussetzung für den Wärmeübertragungsprozeß im Hochtemperatur-Wärmeübertrager geschaffen. Im Anschluß an die thermische Plasmastrahlbehandlung des Rauchgasstromes wird das so entstandene Gasgemisch vorzugsweise wieder in den Hochtemperatur-Wärmeübertrager eingeführt und dieses mit einer Spitzentemperatur versehene Gasgemisch wird im Gegenstrom mit dem eintretenden Frischrauchgasstrom abgekühlt. Dabei erfolgt die restlose Zerstörung organischer Schadstoffe, da auch dieses Temperaturniveau (Abkühlungsphase im Anschluß an die Plasmastrahlbehandlung) noch ebenfalls oberhalb des höchsten, in der Müllverbrennungsanlage erreichbaren Temperaturniveaus liegt.

Mit den vorerläuterten, drei gekoppelten Verfahrensschritten, die eine in bezug auf die thermische Verfahrensführung zur Restbeseitigung von Dioxinen und Furanen bilden sowie unter energetischen Aspekten besonders bevorzugt werden und sinnvoll sind, werden nicht nur die bereits vorhandenen Dioxine und Furane zerstört, sondern es wird auch ihre Neubildung im Bereich niederer Temperaturen in der Abhitzeanlage sicher dadurch verhindert, daß überhaupt sämtliche im Rauchgas vorhandene, organische Substanz zerstört wird, so daß im kritischen Bereich der anschließenden Rauchgasabkühlung zwischen 400 und 300°C keine Ausgangsprodukte mehr für die Neubildung von Dioxinen und Furanen zur Verfügung stehen.

Die Wirksamkeit des erfindungsgemäßen Verfahrens und der erfindungsgemäßen Einrichtung sind unabhängig von der Schadstoffkonzentration und damit dem betriebenen Aufwand in der eigentlichen Verbrennungsstufe, so daß auch für die Nachrüstung von Müllverbrennungsanlagen, die mit gewöhnlichen Feuerungstemperaturen ohne Hochtemperaturverbrennungsstufe arbeiten, eine sichere Entgiftung der Rauchgase gegeben ist.

Die Erfindung wird nachstehend anhand eines Ausführungsbeispieles und einer Figur näher erläutert.

Diese zeigt in schematischer Darstellung eine Sondermüllverbrennungsanlage mit integrierter Plasma-Hochtemperatur-Stufe nach einem Ausführungsbeispiel der Erfindung.

Eine derartige Sondermüllverbrennungsanlage mit einer Jahreskapazität von 10.000 t erzeugt einen Rauchgasstrom von 20.000 Nm³/h. Die übliche Sondermüllverbrennungsanlage, der der Sondermüll zugeführt wird, besteht aus einem Feuerraum 1 und einer Nachverbrennungskammer 2. Im Anschluß an die Hochtemperatur-Nachverbrennungsstufe liegt der Frischrauchgasstrom (Abgas) mit einer Temperatur von ca. 1200°C vor. Dies entspricht einem thermischen Enthalpiestrom von ca. 9 MW. Das Rauchgas enthält neben Stickstoff und Sauerstoff (Luft), CO₂, Wasserdampf, HCl und Cl₂ sowie aus der Umsetzung von Chlorkohlenwasserstoffen auch 150 mg/m³ Dibenzodioxide sowie 100 mg/m³ weitere aliphatische und aromatische chlorierte Kohlenwasserstoffe, wobei letztere durch ungenügende Umsetzung infolge thermischer Inhomogenitäten in der Nachverbrennungskammer 2 entstanden sind und in der vorliegenden Konzentration eine beträchtliche Umweltbedrohung bilden. Weiterhin enthält das Rauchgas aus der Müllverbrennungsanlage 1, 2 Ruß- und Flugaschepartikel.

Dieses Rauchgas mit einer Temperatur von 1200°C wird einer Rekuperationsstufe 3 zugeführt, die einen Hochtemperatur-Wärmeübertrager enthält. Der Frischrauchgasstrom wird dabei in den Mantelraum des Hochtemperatur-Wärmeübertragers der Rekuperationsstufe 3 eingeführt. Diese weist stromab der Einspeisung des Rauchgasstromes in baulicher Einheit zumindest ein Plasmatron 4 auf, durch das alle chemischen Verbindungen in ihre Elemente zerlegt werden, die bei gezielter Quenchung schließlich chemisch stabile ungefährliche Verbindungen, insbesondere H₂O und CO₂ bilden. In dem Mantelraum des Hochtemperatur-Wäremübertragers des Rekuperators 3 wird der Frischrauchgasstrom auf dem Wege zu der Plasmastrahlbehandlung durch das Plasmatron 4 aufgeheizt, und zwar im Gegenstrom durch die Abgase der durch das Plasmatron 4 gebildeten Plasmastufe, d.h. durch das Gasgemisch aus Frischrauchgasstrom und Plasmastrahlgasstrom, das im Anschluß an die Injektion des Plasmagases eine Spitzentemperatur von z.B. 1400°C aufweist. Durch diese Gegenstrom-Aufheizung im Hochtemperatur-Wärmeübertrager der Rekuperationsstufe 3 wird die Temperatur des Frischrauchgasstromes von ca. 1200°C auf ca. 1380°C erhöht. Hierbei kommt es bereits zur thermischen Spaltung von 90% der im Rauchgas noch vorhandenen CKW bzw. der Dibenzodioxine, insbesondere an der heißen Rohrwand des Hochtemperatur-Wärmeübertragers in dem Rekuperator 3 unter thermischen Bedingungen, die in einer konventionellen Hochtemperaturnachverbrennung nicht realisierbar sind. In diesen, auf ca. 1380°C aufgeheizten Rauchgasstrom wird nach dem Verlassen des Hochtemperatur-Wärmeübertragers der Rekuperationsstufe 3 ein Luftplasmastrahl aus einem Plasmatron 4 mit einer Leistung von 150 kW eingeführt, der eine Temperatur von 4000°C besitzt. Diese Leistung entspricht ca. 1,7% des gesamten thermischen Rauchgasenthalpiestromes.

Der Luftplasmastrahl wird mittels eines gegenüber dem Rauchgasstrom äußerst geringen Plasmasträgerluftdurchsatz durch das Plasmatron 4 von ca. 100 Nm³/h gebildet. Stromabwärts kommt es in dieser Plasmastufe zu einer gleichmäßigen Vermischung zwischen Rauchgasstrom und Luftplasmastrahl, die eine weitere, temperaturfeldfreie Spitzenaufheizung des Frischrauchgasstromes um nur 20°C auf ca. 1400°C hervorruft. Diese Temperaturerhöhung bewirkt eine weitere thermische Spaltung von Dioxinen, CKW etc. um ca. 9,5%. Da überdies dieser Bereich zusätzlich frei von einem Temperaturfeld ist, wird ein Durchbrechen von stabilen CKW, Dioxinen etc. durch diese Höchsttemperaturzone verhindert.

Das Gasgemisch aus dem Frischrauchgasstrom und dem Luftplasmastrahl mit den durch die Plasmabehandlung umgesetzten, chemisch ungefährlichen Verbindungen wie H₂O und CO₂, die als Gase das Plasmatron 4 mit einer Temperatur von 1400°C verlassen, wird unmittelbar darauf dem Rohrraum des Hochtemperatur-Wärmeübertragers der Rekuperationsstufe 3 zugeführt und im Gegenstrom mit dem Frischrauchgasstrom auf ca. 1210°C abgekühlt. Diese Verfahrensführung ermöglicht eine Aufheizung des aus der Sondermüllverbrennungsanlage 1, 2 stammenden Rauchgasstromes auf 1380°C mit sehr geringem Energieaufwand. Die Abkühlendtemperatur in dieser Abkühlstufe liegt stets oberhalb der mit konventioneller Hochtemperturverbrennung erzeugten Maximaltemperatur, so daß auch diese Stufe zur Komplettierung der thermischen Schadstoffzersetzung beiträgt. Anschließend wird der solchermaßen behandelte Rauchgasstrom in eine herkömmliche Abhitzeanlage 5 mit anschließender Rauchgasreinigungsstufe 6 abgeführt. Aus dieser Rauchgasreinigungsstufe 6 tritt Reingas aus, das frei von Dioxinen und anderen organischen Verbindungen ist.

Das Verfahren und die Einrichtung nach dem obigen Ausführungsbeispiel der Erfindung sichern unter allen Betriebsbedingungen der Verbrennungsstufe, daß die Abgase frei von CKW und Dioxinen sind und daß die Gesamtanlage höchsten Anforderungen des Umweltschutzes genügt.

Der gesamte Prozeß kann auch auf einem höheren Temperaturniveau in bezug auf die Spitzenaufheizung in der Plasmastufe des Plasmatrons 4 geführt werden. Die Anwendung der Rekuperationsstufe führt zu einem äußerst niedrigen energetischen Aufwand; überdies ist auch die Nachrüstung bestehender Müllverbrennungsanlagen in unkomplizierter Weise möglich.

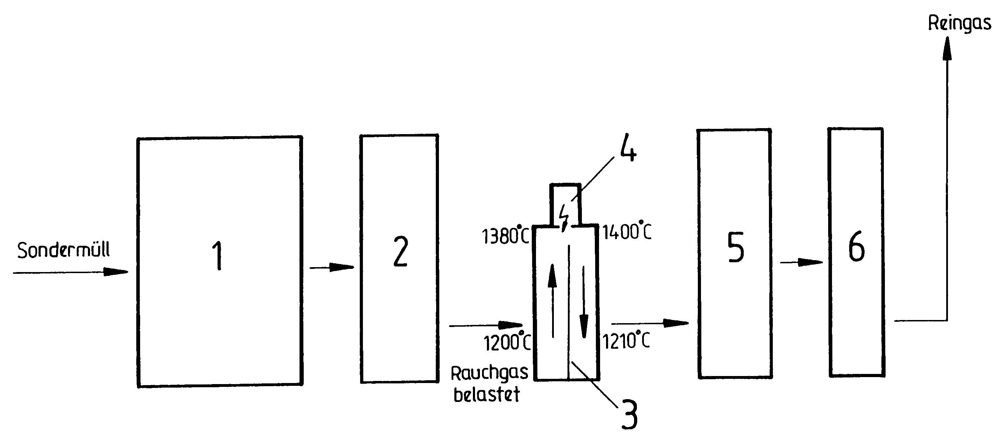

Nach einer weiteren Ausführungsform der Erfindung kann auf die in der Figur dargestellte, übliche Hochtemperaturnachverbrennungsstufe 2 in der Müllverbrennungsanlage auch verzichtet werden.

Die nach dem erfindungsgemäßen Verfahren arbeitende Höchsttemperaturstufe im Rahmen der Rekuperationsstufe 3 und der Plasmabehandlung durch das Plasmatron 4 schließt sich dann verfahrenstechnisch unmittelbar an die Primärfeuerung des Feuerraumes 1 (Drehrohrofen) der Müllverbrennungsanlage an. In diesem Fall ist der Hochtemperatur-Wärmeübertrager in der Rekuperationsstufe 3 dann für eine höhere Temperaturdifferenz auszulegen.

Durch die Erfindung wird mit Sicherheit verhindert, daß Dioxine, Furane und andere Giftstoffe aus einer Müllverbrennungsanlage in die Atmosphäre austreten.

Ein Hauptvorteil der Erfindung liegt darin, daß eine Vernichtung toxischer Stoffe im Rauchgas mit relativ geringem Energieaufwand erreichbar ist. Der ganze Prozeß wird, trotz einer Plasmainjektion in die Rauchgase, so geführt, daß diese selbst nicht in den Plasmazustand überführt werden, eine Erwärmung des gesamten Rauchgasstromen in Plasmatrons wäre energetisch mit unvertretbarem Aufwand verbunden. Durch das erfindungsgemäße Verfahren und die zugehörige Einrichtung bedarf die Plasmastrahlbehandlung lediglich einer kleinen Temperaturdifferenz im Frischrauchgas.

Das gemäß einer Ausführungsform der Erfindung besonders bevorzugte Verfahren zeichnet sich dadurch aus, daß das noch heiße Frischrauchgas aus der Müllverbrennungsanlage in einem Hochtemperatur-Wärmeübertrager weiter aufgeheizt, anschließend durch Vermischung mit einem Plasmastrahl weiter erhitzt und anschließend in dem Hochtemperatur-Wärmeübertrager zum Aufheizen des aus der Müllverbrennungsanlage abgenommenen Frischrauchgases genutzt wird. Bereits bei der Aufheizung im Hochtemperatur-Wärmeübertrager wird ein großer Teil der im Frischrauchgas enthaltenen organischen Verbindungen zerstört. Die Zumischung eines chemisch nicht wirksamen Plasmastrahles kleiner Leistung, z.B. mit Luft, Wasserdampf oder einem Teil des Frischrauchgases selbst als Plasmagas, bewirkt eine geringfügige weitere Aufheizung, die einerseits wirksam ist, um die organischen Schadstoffe zu spalten und die andererseits auch die organischen Bestandteile der Flugasche zerstört und letztere mit einer Schmelzeschicht überzieht. Auf diese Weise führt die Zerstörung aller organischer Substanz im Frischrauchgas der Müllverbrennungsanlage dazu, daß auch in kritischen Temperaturbereichen der Rauchgasabkühlung (z.B. im Bereich zwischen 400 und 300°C) Dioxine und Furane nicht neu gebildet werden. Der Energieaufwand für die Beseitigung hochtoxischer Restverbindungen im Abgas der Müllverbrennungsanlage ist dabei relativ gering, weil die notwendige Temperatur erreicht wird, ohne daß der gesamte Rauchgasstrom auf Plasmatemperatur erhitzt werden muß.

Die Erfindung zeichnet sich durch folgende weitere Vorteile aus:
- Sichere Entgiftung der Rauchgase von Müllverbrennungsanlagen, unabhängig von der Art des Mülls, der Toxität der Rauchgase und der Art des Verbrennungsverfahrens,
- Vermeidung der Neubildung von Dioxinen im Niedrigtemperaturbereich der Abhitzeanlage durch Vernichtung der hierzu notwendigen organischen Vorprodukte,
- hohe Sicherheit der Müllverbrennungsanlage auch bei instationären Betriebszuständen, wie Lastschwankungen, planmäßige oder unplanmäßige An- und Abfahrvorgänge, Havarien etc.,
- niedrige Investitionskosten,
- Möglichkeit der Nachrüstung vorhandener Müllverbrennungsanlagen mit geringem Aufwand,
- Inertisierung des Flugstaubes bezüglich Eluation durch Schmelzebildung an der Oberfläche der Aschepartikel,
- Vermeidung einer wesentlichen Beeinflussung der verfahrenstechnischen Prozessführung der Müllverbrennungsanlage,
- Schaffen ausreichender Zeitdifferenzen für die Zerstörung der Dioxine und Flurane durch die Verweilzeit des Rauchgases im Hochtemperatur-Wärmeübertrager in den drei Stufen desselben: Mantelraum, Rohrraum und Plasmastufe,
- leichte Steuerbarkeit des Temperaturniveaus der erfindungsgemäßen Höchsttemperaturstufe (Rekuperatorstufe 3 mit Plasmastufe 4 und Hochtemperatur-Wärmeübertrager) auf einen jeweils optimalen Wert, ohne wesentliche Änderung des Energieverbrauches,
- gegebenenfalls Einsparung der üblichen Hochtemperatur-Nachverbrennung in der Müllverbrennungsanlage einschließlich der dazu notwendigen Unterfeuerungsleistung.

## Patentansprüche

1. Verfahren zum Entgiften der Abgase aus einer Müllverbrennungsanlage (1, 2), insbesondere Sondermüllverbrennungsanlage, zur Beseitigung toxischer Verbindungen, wie Halogenorganika und Kohlenwasserstoffen, wobei in die als heißer Frischrauchgasstrom die Müllverbrennungsanlage verlassenden Abgase zur thermischen Spaltung ihrer toxischen Verbindungen zumindest ein Plasmagasstrom (4) eingemischt wird, **dadurch gekennzeichnet**, daß der heiße Frischrauchgasstrom in einer Rekuperationsstufe (3) mit einem Hochtemperatur-Wärmeübertrager zunächst weiter aufgeheizt und anschließend der Frischrauchgasstrom durch Injektion des Plasmagasstromes weiter erhitzt wird.

2. Verfahren nach Anspruch 1, **dadurch gekennzeichnet**, daß das Gasgemisch aus Plasmagasstrom (4) und Frischrauchgasstrom als Heizmedium des Hochtemperatur-Wärmeübertragers für die Aufheizung des aus der Müllverbrennungsanlage (1, 2) entnommenen Frischrauchgasstromes dient.

3. Verfahren nach Anspruch 2, **dadurch gekennzeichnet**, daß das Gasgemisch aus Frischrauchgasstrom und eingemischtem Plasmagasstrom (4) im Gegenstromverfahren in einen Rohrraum des Hochtemperatur-Wärmeübertragers eingeführt wird, zur Wärmeübertragung auf den in einem Rohrmantel des Hochtemperatur-Wärmeübertragers in Gegenrichtung strömenden, unbehandelten Frischrauchgasstrom aus der Müllverbrennungsanlage.

4. Verfahren nach zumindest einem der vorhergehenden Ansprüche 1 bis 3, **dadurch gekennzeichnet**, daß der heiße Frischrauchgasstrom aus der Müllverbrennungsanlage (1, 2) mit einer Temperatur von ca. 1200°C zu der Rekuperationsstufe (3) mit Hochtemperatur-Wärmeübertrager zugeführt und auf eine Temperatur von ca. 1380°C aufgeheizt wird, anschließend von einem integral mit der Rekuperationsstufe (3) verbundenen Plasmatron (4) der Plasmagasstrom mit einer Temperatur von ca. 4000°C in den aufgeheizten Frischrauchgasstrom eingemischt wird und das Gasgemisch aus Frischrauchgas- und Plasmastrahlgasstrom mit einer Temperatur von ca. 1400°C unmittelbar stromab des Plasmatrons (4) in den Rohrraum des Hochtemperatur-Wärmeübertragers zur Aufheizung des von der Müllverbrennungsanlage abgenommenen Frischrauchgasstromes im Gegenstrom geführt wird und hierbei auf eine Temperatur von ca. 1210°C abgekühlt und das Gasgemisch anschließend einer Abwärmeverwertungsstufe (5) sowie einer Rauchgasreinigungsstufe (6) zugeführt wird.

5. Verfahren nach zumindest einem der vorhergehenden Ansprüche 1 bis 3, **dadurch gekennzeichnet**, daß der Frischrauchgasstrom zur Plasmastrahlgasbehandlung (4) unmittelbar einer Hochtemperatur-Verbrennungsstufe bzw. Nachverbrennungsstufe der Müllverbrennungsanlage (1, 2) entommen wird.

6. Verfahren nach zumindest einem der vorhergehenden Ansprüche 1 bis 3, **dadurch gekennzeichnet**, daß der Frischrauchgasstrom unmittelbar einer primären Verbrennungsstufe (1) der Müllverbrennungsanlage ohne Hochtemperatur-Verbrennungsstufe entnommen wird.

7. Verfahren nach zumindest einem der vorhergehenden Ansprüche 1 bis 6, **dadurch gekennzeichnet**, daß als Plasmaträgergas Luft verwendet wird.

8. Verfahren nach zumindest einem der vorhergehenden Ansprüche 1 bis 6, **dadurch gekennzeichnet**, daß als Plasmaträgergas Wasserdampf verwendet wird.

9. Verfahren nach zumindest einem der vorhergehenden Ansprüche 1 bis 6, **dadurch gekennzeichnet**, daß als Plasmaträgergas ein Teilstrom des heißen Frischrauchgasstromes vor Einspeisung in den Hochtemperatur-Wärmeübertrager verwendet wird.

10. Einrichtung zur Durchführung des Verfahrens gemäß Anspruch 1, **dadurch gekennzeichnet**, daß im Anschluß an die Müllverbrennungsanlage (1, 2) ein Rekuperator (3) mit einem Hochtemperatur-Wärmeübertrager sowie einem Plasmatron (4) zur Einmischung zumindest eines Plasmagasstromes in den Frischrauchgasstrom vorgesehen ist.

11. Einrichtung nach Anspruch 10, **dadurch gekennzeichnet**, daß die Müllverbrennungsanlage (1, 2) eine Nachverbrennungskammer (2) aufweist.

12. Einrichtung nach Anspruch 10 oder 11, **dadurch gekennzeichnet**, daß der Rekuperator (3) integral den Hochtemperatur-Wärmeübertrager sowie das Plasmatron (4) in einer baulichen Einheit aufweist und im Gegenstromprinzip das Frischrauchgas/Plasmastrahlgas-Gasgemisch stromab des Plasmatrons (4) zur Aufheizung des in den Rekuperator (3) stromauf des Plasmatrons (4) eintretenden Frischrauchgasstromes verwendet ist.

13. Einrichtung nach zumindest einem der vorhergehenden Ansprüche 10 bis 12, **dadurch gekennzeichnet**, daß die Rekuperationsstufe (3) einen Mantelraum und einen Rohrraum als Hochtemperatur-Wärmeübertrager aufweist, das Frischrauchgas aus der Müllverbrennungsanlage (1, 2) in den Mantelraum einführbar ist und im Gegenstrom mit dem in den Rohrraum einführbaren Gasgemisch aus Frischrauchgas und Plasmagas aus dem Plasmatron (4) aufheizbar ist.

14. Einrichtung nach zumindest einem der vorhergehenden Ansprüche 10 bis 13, **dadurch gekennzeichnet**, daß stromab der Rekuperationsstufe (3) mit dem Plasmatron (4) eine Abhitzeverwertungsstufe (5) sowie eine Rauchgasreinigungsstufe (6) abfolgend angeschlossen sind.

## Claims

1. A process for the detoxification of the waste gases from a waste incineration plant (1, 2), more particularly a special waste incineration plant, for the elimination of toxic compounds, such as organic halogen compounds and hydrocarbons, wherein, for the purpose of thermal separation of the toxic compounds in the waste gases leaving the waste incineration plant in the form of a hot crude flue gas stream, at least one stream of plasma gas (4) is mixed into said waste gases, characterised in that the hot crude flue gas stream is first heated to a higher temperature in a recuperation stage (3) comprising a high-temperature heat-exchanger, and then the crude flue gas stream is heated further by injection of the plasma gas stream.

2. A process according to claim 1, characterised in that the gas mixture consisting of the plasma gas stream (4) and the crude flue gas stream serves as a heating medium in the high-temperature heat-exchanger for heating up the crude flue gas stream taken from the waste incineration plant (1, 2).

3. A process according to claim 2, characterised in that the gas mixture consisting of the crude flue gas stream and the added plasma gas stream (4) is introduced, on the counter-current principle, into a tube chamber of the high-temperature heat-exchanger for the purpose of heat transfer to the untreated crude flue gas stream flowing from the waste incineration plant in the opposite direction in a tube jacket of the high-temperature heat-exchanger.

4. A process according to at least one of the preceding claims 1 to 3, characterised in that the hot crude flue gas stream from the waste incineration plant (1, 2) is fed at a temperature of about 1200°C to the recuperation stage (3) comprising a high-temperature heat-exchanger and is heated up to a temperature of about 1380°C, and then the plasma gas stream is mixed, at a temperature of about 4000°C, into the heated-up crude flue gas stream by means of a plasmatron (4) integrally connected to the recuperation stage (3) and the gas mixture consisting of the crude flue gas and plasma jet gas stream at a temperature of about 1400°C is taken in counter-current, immediately downstream of the plasmatron (4), into the tube chamber of the high-temperature heat-exchanger in order to heat up the crude flue gas stream withdrawn from the waste incineration plant, and in these conditions is cooled to a temperature of about 1210°C and the gas mixture is then fed to a waste-heat utilisation stage (5) and to a flue gas purification stage (6).

5. A process according to at least one of the preceding claims 1 to 3, characterised in that the crude flue gas stream for the plasma jet gas treatment (4) is taken directly from a high-temperature incineration stage or post-incineration stage of the waste incineration plant (1, 2).

6. A process according to at least one of the preceding claims 1 to 3, characterised in that the crude flue gas stream is taken directly from a primary incineration stage (1) of the waste incineration plant without a high-temperature incineration stage.

7. A process according to at least one of the preceding claims 1 to 6, characterised in that air is used as the plasma vehicle gas.

8. A process according to at least one of the preceding claims 1 to 6, characterised in that steam is used as the plasma vehicle gas.

9. A process according to at least one of the preceding claims 1 to 6, characterised in that a sub-stream of the hot crude flue gas before being fed to the high-temperature heat-exchanger is used as the plasma vehicle gas.

10. Apparatus for performing the process according to claim 1, characterised in that the waste incineration plant (1, 2) is followed by a recuperator (3) comprising a high-temperature heat-exchanger and a plasmatron (4) for mixing at least one plasma gas stream into the crude flue gas stream.

11. Apparatus according to claim 10, characterised in that the waste incineration plant (1, 2) has a post-incineration chamber (2).

12. Apparatus according to claim 10 or 11, characterised in that the recuperator (3) integrally comprises the high-temperature heat-exchanger and the plasmatron (4) in one structural unit and the mixture of crude flue gas and plasma jet gas is used on the counter-current principle downstream of the plasmatron (4) to heat up the crude flue gas stream entering the recuperator (3) upstream of the plasmatron (4).

13. Apparatus according to at least one of the preceding claims 10 to 12, characterised in that the recuperation stage (3) comprises a jacket chamber and a tube chamber as the high-temperature heat-exchanger, the crude flue gas from the waste incineration plant (1, 2) is introducible into the jacket chamber and is adapted to be heated up in counter-current with the mixture of crude flue gas and plasma gas from the plasmatron (4) introducible into the tube chamber.

14. Apparatus according to at least one of the preceding claims 10 to 13, characterised in that a waste-heat utilisation stage (5) and a flue gas purification stage (6) are connected successively to the plasmatron (4) downstream of the recuperation stage (3).

## Revendications

1. Procédé de décontamination des fumées d'une unité (1, 2) d'incinération de déchets, notamment une unite d'incinération de déchets spéciaux, pour éliminer les composés toxiques comme les composés organohalogénés et les hydrocarbures, en injectant par mélange au moins un courant de plasma (4) gazeux dans les fumées quittant l'unité d'incinération de déchets en tant que fumées très chaudes pour décomposer thermiquement leurs composés toxiques,
caractérisé en ce qu'on chauffe d'abord le courant de fumée nouvellement formé dans un étage de récupération (3) avec un échangeur de chaleur à haute température et ensuite on chauffe encore le courant de fumée nouvellement formée par injection du courant de plasma gazeux.

2. Procédé selon la revendication 1, caractérisé en ce que le mélange gazeux de courant de plasma gazeux (4) et le courant de fumée nouvellement formée sert de milieu de chauffage de l'échangeur de chaleur à haute température pour chauffer le courant de fumée nouvellement formée prélevé à la sortie de l'unité (1, 2) d'incinération de déchets.

3. Procédé selon la revendication 2, caractérisé en ce qu'on injecte le mélange gazeux du courant de fumée nouvellement formée et du courant de plasma gazeux (4) par procédé à contre-courant dans une chambre tubulaire d'échangeur de chaleur à haute température, pour transférer la chaleur au courant de fumée nouvellement formée non-traité s'écoulant en sens inverse dans la double enveloppe d'échangeur de chaleur à haute température.

4. Procédé selon l'une des revendications précédentes 1 à 3, caractérisé en ce qu'on introduit le courant de fumée nouvellement formée très chaude sortant de l'unité (1, 2) d'incinération de déchets à une température d'environ 1200°C dans l'étage de récupération (3) d'un échangeur de chaleur à haute température et qu'on le porte à une température d'environ 1380°C, ensuite on mélange le courant de plasma gazeux fourni par un plasmatron (4) intégralement lié à l'étage de récupération (3) à une température d'environ 4000°C dans le courant de gaz de fumée nouvellement formée réchauffée et on introduit le mélange de gaz de fumée nouvellement formée et de courant de plasma gazeux ayant une température d'environ 1400°C immédiatement en aval du plasmatron (4) dans la chambre tubulaire de l'échangeur de chaleur à haute température pour réchauffer le courant de fumée nouvellement formée provenant de la sortie de l'unité d'incinération de déchets à contre-courant et ainsi on le refroidit à une température d'environ 1210°C et ensuite on conduit le mélange de gaz à un étage (5) de valorisation de la chaleur perdue ainsi qu'à un étage (6) d'épuration de la fumée.

5. Procédé selon au moins l'une des revendications précédentes 1 à 3, caractérisé en ce qu'on prélève le courant de fumée nouvellement formée destiné au traitement par jet de plasma gazeux (4) immédiatement après l'étage de combustion à haute température ou l'étage de post-combustion de l'unité d'incinération des déchets (1, 2).

6. Procédé selon au moins l'une des revendications précédentes 1 à 3, caractérisé en ce qu'on prélève le courant de fumée nouvellement formée immédiatement à la sortie d'un étage (1) de combustion primaire de l'unité d'incinération de déchets sans étage de combustion à haute température.

7. Procédé selon au moins l'une des revendications précédentes 1 à 6, caractérisé en ce qu'on utilise comme véhicule de plasma gazeux de l'air.

8. Procédé selon au moins l'une des revendications précédentes 1 à 6, caractérisé en ce qu'on utilise comme véhicule de plasma gazeux de la vapeur d'eau.

9. Procédé selon au moins l'une des revendications précédentes 1 à 6, caractérisé en ce qu'on utilise comme véhicule de plasma gazeux un courant partiel du courant de fumée nouvellement formée très chaud avant l'injection dans l'échangeur de chaleur à haute température.

10. Dispositif pour réaliser le procédé selon la revendication 1, caractérisé en ce qu'en connexion à l'unité (1, 2) d'incinération de déchets, on prévoit un récupérateur (3) dans un échangeur de chaleur à haute température ainsi qu'un plasmatron (4) pour mélanger au moins un courant de plasma gazeux dans le courant de fumée nouvellement formée.

11. Dispositif selon la revendication 10, caractérisé en ce que l'unité (1, 2) d'incinération de déchets présente une chambre (2) de post-combustion.

12. Dispositif selon la revendication 10 ou 11, caractérisé en ce que le récupérateur (3) comprend de manière intégrée l'échangeur de chaleur à haute température ainsi que le plasmatron (4) dans une seule unité et qu'on utilise à contre-courant le mélange gazeux jet de plasma/fumée nouvellement formée en aval du plasmatron (4) pour chauffer le courant de fumée nouvellement formée entrant en amont du plasmatron (4) dans le récupérateur (3).

13. Dispositif selon au moins l'une des revendications précédentes 10 à 12, caractérisé en ce que l'étage de récupération (3) présente une double enveloppe et une chambre tubulaire en tant qu'échangeur de chaleur à haute température, on peut introduire la fumée nouvellement formée en provenance de l'unité (1, 2) d'incinération de déchets dans la double enveloppe et on la chauffe à contre-courant avec le mélange de gaz de fumée nouvellement formée et de plasma sortant du plasmatron (4) qu'on peut introduire dans la chambre tubulaire.

14. Dispositif selon au moins l'une des revendications précédentes 10 à 13, caractérisé en ce qu'en aval de l'étage de récupération (3) avec le plasmatron (4), on branche à la suite un étage de valorisation (5) de chaleur perdue ainsi qu'un étage (6) de purification de fumée.
